(19) Europäisches Patentamt
European Patent Office
Office européen des brevets

(11) **EP 4 418 526 A1**

(12) **EUROPEAN PATENT APPLICATION**
published in accordance with Art. 153(4) EPC

(43) Date of publication:
**21.08.2024  Bulletin 2024/34**

(21) Application number: **22899738.3**

(22) Date of filing: **03.03.2022**

(51) International Patent Classification (IPC):
**H02P 21/14** *(2016.01)*          **H02P 21/22** *(2016.01)*
**H02P 25/022** *(2016.01)*

(86) International application number:
**PCT/CN2022/079137**

(87) International publication number:
**WO 2023/097915 (08.06.2023 Gazette 2023/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **03.12.2021   CN 202111466435**

(71) Applicants:
• **Huai'An Welling Motor Manufacturing Co., Ltd.
Huai'an, Jiangsu 223010 (CN)**
• **Midea Welling Motor Technology (Shanghai) Co.,
Ltd
Shanghai 201210 (CN)**

(72) Inventors:
• **ZHENG, Zhihao
Huai'an, Jiangsu  223010 (CN)**
• **XU, Peilin
Huai'an, Jiangsu  223010 (CN)**
• **QIN, Xiangnan
Huai'an, Jiangsu  223010 (CN)**
• **FU, Junyong
Huai'an, Jiangsu  223010 (CN)**

(74) Representative: **Ran, Handong
Maucher Jenkins
Seventh Floor Offices
Artillery House
11-19 Artillery Row
London SW1P 1RT (GB)**

(54) **FIELD WEAKENING CONTROL METHOD AND APPARATUS FOR MOTOR, MOTOR CONTROLLER, AND MOTOR CONTROL SYSTEM**

(57)     A field weakening control method and apparatus for a motor, a motor controller, a motor control system, and a medium. The method comprises: acquiring a direct current bus voltage, and determining the phase of an alternating current input voltage; determining a maximum value and a minimum value of the direct current bus voltage according to the direct current bus voltage, and determining an average value of the direct current bus voltage according to the maximum value and the minimum value; determining a field weakening average current according to a reference voltage amplitude for controlling the motor and the average value, and determining a field weakening compensation current according to the field weakening average current, a limiting value of a reference current for controlling the motor, the maximum value, the minimum value, and the phase of the alternating current input voltage; and performing field weakening control on the motor according to the field weakening average current and the field weakening compensation current.

| |
|---|
| Obtaining direct current bus voltages, and determining a phase of an alternating current input voltage — S11 |
| Determining a maximum direct current bus voltage and a minimum direct current bus voltage among the direct current bus voltages, and determining an average direct current bus voltage based on the maximum direct current bus voltage and the minimum direct current bus voltage — S13 |
| Determining an average field weakening current based on a reference voltage amplitude for controlling the motor and the average direct current bus voltage, and determining a field weakening compensation current based on the average field weakening current, a limit amplitude of a reference current for controlling the motor, the maximum direct current bus voltage, the minimum direct current bus voltage, and the phase of the alternating current input voltage — S15 |
| Performing field weakening control on the motor based on the average field weakening current and the field weakening compensation current — S17 |

FIG. 1

EP 4 418 526 A1

**Description**

**PRIORITY INFORMATION**

This application claims priority to and the benefit of Chinese patent application No. 202111466435.1 filed with China National Intellectual Property Administration on December 3, 2021, the entire content of which is incorporated herein by reference.

**FIELD**

The present disclosure relates to the field of motor control technologies, and more particularly, to a field weakening control method and apparatus for a motor, a motor controller, a motor control system, and a medium.

**BACKGROUND**

In an electrolytic capacitor-less motor control system, a small-capacity film capacitor is used instead of an electrolytic capacitor. Since it is difficult for the film capacitor to keep a direct current bus voltage constant, the direct current bus voltage fluctuates at a double frequency of a frequency of a grid. When the direct current bus voltage falls to a relatively low level, an output capacity of the motor needs to be improved through field weakening control. A field weakening control strategy in the related art realizes field weakening based on feedback of the direct current bus voltage. When the direct current bus voltage fluctuates, a proportional-integral regulator fails to respond to fluctuations of the direct current bus voltage in time because of its slow response, which leads to a difficulty of field weakening control in high-speed operation and a weak load-carrying capacity of the motor during high-speed operation. Therefore, optimizing the field weakening control strategy in the electrolytic capacitor-less motor control system is of engineering and practical significance to expand an operation range of the motor and improve the load-carrying capacity during the high-speed operation.

**SUMMARY**

The present disclosure aims to solve at least one of the technical problems in the related art to some extent. To this end, an objective of the present disclosure is to provide a field weakening control method for a motor. The field weakening control method optimizes a field weakening control strategy in an electrolytic capacitor-less motor control system and is therefore capable of accurately performing field weakening control during a periodic drop of a direct current bus voltage and capable of improving a load-carrying capacity of the motor during high-speed operation.

A second objective of the present disclosure is to provide a computer-readable storage medium.

A third objective of the present disclosure is to provide a motor controller.

A fourth objective of the present disclosure is to provide a field weakening control apparatus for a motor.

A fifth objective of the present disclosure is to provide a motor control system.

To achieve the above objectives, according to an embodiment in a first aspect of the present disclosure, a field weakening control method for a motor is provided. The method includes: obtaining direct current bus voltages, and determining a phase of an alternating current input voltage; determining a maximum direct current bus voltage and a minimum direct current bus voltage among the direct current bus voltages, and determining an average direct current bus voltage based on the maximum direct current bus voltage and the minimum direct current bus voltage; determining an average field weakening current based on a reference voltage amplitude for controlling the motor and the average direct current bus voltage, and determining a field weakening compensation current based on the average field weakening current, a limit amplitude of a reference current for controlling the motor, the maximum direct current bus voltage, the minimum direct current bus voltage, and the phase of the alternating current input voltage; and performing field weakening control on the motor based on the average field weakening current and the field weakening compensation current.

With the field weakening control method for the motor according to the embodiment of the present disclosure, fluctuations of the direct current bus voltage can be tracked for accurately performing the field weakening control on the motor, which is conducive to expanding an operation range of the motor and improving the load-carrying capacity of the motor during the high-speed operation.

In an embodiment, the determining the phase of the alternating current input voltage includes: obtaining the alternating current input voltage; and obtaining the phase of the alternating current input voltage through performing phase-locking processing on the alternating current input voltage by a single-phase phase-locked loop.

In an embodiment, the determining the maximum direct current bus voltage and the minimum direct current bus voltage among the direct current bus voltages includes: calculating, based on the direct current bus voltages, the maximum direct current bus voltage and the minimum direct current bus voltage for each cycle at a double frequency of a frequency of an alternating current voltage.

In an embodiment, the average field weakening current is calculated through the following formula:

$$I_{d\_avg} = (\frac{V_{dc\_avg}}{\sqrt{3}} - V_{s\_ref}) \cdot (K_p + \frac{K_i}{s})$$

, where $I_{d\_avg}$ represents the average field weakening current, $V_{dc\_avg}$ represents the average direct current bus voltage, $V_{s\_ref}$ represents the reference voltage amplitude, $s$ represents a Laplace operator, $K_p$ represents a proportional gain coefficient, and $K_i$ represents an integral coefficient.

In an embodiment, the field weakening compensation current is calculated through the following formula:

$$I_{d\_com} = \frac{V_{dc\_max} - V_{dc\_min}}{V_{dc\_max}} \cdot (I_{d\_avg} - I_{d\_lim}) \cdot (1 - |\sin\theta_{ac}|)$$

, where $I_{d\_com}$ represents the field weakening compensation current, $V_{dc\_max}$ represents the maximum direct current bus voltage, $V_{dc\_min}$ represents the minimum direct current bus voltage, $I_{d\_avg}$ represents the average field weakening current, $I_{d\_lim}$ represents the limit amplitude of the reference current, and $\theta_{ac}$ represents the phase of the alternating current input voltage.

In an embodiment, the performing the field weakening control on the motor based on the average field weakening current and the field weakening compensation current includes: calculating a difference between the average field weakening current and the field weakening compensation current as a field weakening control current; and performing field weakening control on the motor based on the field weakening control current.

In an embodiment, the limit amplitude of the reference current is determined through: determining the reference current; and limiting an amplitude of the reference current to a predetermined amplitude, to serve as the limit amplitude of the reference current.

To achieve the above objectives, according to an embodiment in a second aspect of the present disclosure, a computer-readable storage medium is provided. The computer-readable storage medium stores a field weakening control program for a motor. The field weakening control program for the motor, when executed by a processor, implements the field weakening control method for the motor according to any of the above embodiments.

With the computer-readable storage medium according to the embodiment of the present disclosure, the fluctuations of the direct current bus voltage can be tracked for accurately performing the field weakening control on the motor, which is conducive to expanding the operation range of the motor and improving the load-carrying capacity of the motor during the high-speed operation.

To achieve the above objectives, according to an embodiment in a third aspect of the present disclosure, a motor controller is provided. The motor controller includes a memory, a processor, and a field weakening control program for a motor stored on the memory and executable on the processor. The processor, when executing the field weakening control program for the motor, implements the field weakening control method for the motor according to any of the above embodiments.

With the motor controller according to the embodiment of the present disclosure, the fluctuations of the direct current bus voltage can be tracked for accurately performing the field weakening control on the motor, which is conducive to expanding the operation range of the motor and improving the load-carrying capacity of the motor during the high-speed operation.

To achieve the above objectives, according to an embodiment in a fourth aspect of the present disclosure, a field weakening control apparatus for a motor is provided. The apparatus includes an obtaining module, a first determination module, a second determination module, a third determination module, and a control module. The obtaining module is configured to obtain direct current bus voltages. The first determination module is configured to determine a phase of an alternating current input voltage. The second determination module is configured to determine a maximum direct current bus voltage and a minimum direct current bus voltage among the direct current bus voltages, and determine an average direct current bus voltage based on the maximum direct current bus voltage and the minimum direct current bus voltage. The third determination module is configured to determine an average field weakening current based on a reference voltage amplitude for controlling the motor and the average direct current bus voltage, and determine a field weakening compensation current based on the average field weakening current, a limit amplitude of a reference current for controlling the motor, the maximum direct current bus voltage, the minimum direct current bus voltage, and the phase of the alternating current input voltage. The control module is configured to perform field weakening control on the motor based on the average field weakening current and the field weakening compensation current.

With the field weakening control apparatus for the motor according to the embodiment of the present disclosure, the fluctuations of the direct current bus voltage can be tracked for accurately performing the field weakening control on the motor, which is conducive to expanding the operation range of the motor and improving the load-carrying capacity of the motor during the high-speed operation.

To achieve the above objectives, according to an embodiment in a fifth aspect of the present disclosure, a motor control system is provided. The motor control system includes a first voltage detection circuit, a second voltage detection circuit, and a motor controller. The first voltage detection circuit is configured to detect direct current bus voltages. The second voltage detection circuit is configured to detect an alternating current input voltage. The motor controller is configured to determine a phase of the alternating current input voltage based on the alternating current input voltage, determine a maximum direct current bus voltage and a minimum direct current bus voltage among the direct current bus voltages, and determine an average direct current bus voltage based on the maximum direct current bus voltage and the minimum direct current bus voltage. The motor controller is further configured to determine an average field weakening current based on a reference voltage amplitude for controlling a motor and the average direct current bus voltage, determine a field weakening compensation current based on the average field weakening current, a limit amplitude of a reference current for controlling the motor, the maximum direct current bus voltage, the minimum direct current bus voltage, and the phase of the alternating current input voltage, and perform field weakening control on the motor based on the average field weakening current and the field weakening compensation current.

With the motor control system according to the embodiment of the present disclosure, the fluctuations of the direct current bus voltage can be tracked for accurately performing the field weakening control on the motor, which is conducive to expanding the operation range of the motor and improving the load-carrying capacity of the motor during the high-speed operation.

In an embodiment, the motor controller is further configured to obtain the phase of the alternating current input voltage through performing phase-locking processing on the alternating current input voltage by a single-phase phase-locked loop.

In an embodiment, the motor controller is further configured to calculate, based on the direct current bus voltages, the maximum direct current bus voltage and the minimum direct current bus voltage for each cycle at a double frequency of a frequency of an alternating current voltage.

In an embodiment, the motor controller is further configured to calculate the average field weakening current

$$I_{d\_avg} = (\frac{V_{dc\_avg}}{\sqrt{3}} - V_{s\_ref}) \cdot (K_{\mathrm{p}} + \frac{K_i}{s})$$

through the following formula:, where $I_{d\_avg}$ represents the average field weakening current, $V_{dc\_avg}$ represents the average direct current bus voltage, $V_{s\_ref}$ represents the reference voltage amplitude, $s$ represents a Laplace operator, $K_p$ represents a proportional gain coefficient, and $K_{\mathrm{i}}$ represents an integral coefficient.

In an embodiment, the motor controller is further configured to calculate the field weakening compensation

$$I_{\mathrm{d}\_com} = \frac{V_{dc\_\max} - V_{dc\_\min}}{V_{dc\ \max}} \cdot (I_{\mathrm{d}\_avg} - I_{\mathrm{d}\_\lim}) \cdot (1 - |\sin\theta_{ac}|)$$

current through the following formula:, where $I_{d\_com}$ represents the field weakening compensation current, $V_{dc\_\max}$ represents the maximum direct current bus voltage, $V_{dc\_\min}$ represents the minimum direct current bus voltage, $I_{d\_avg}$ represents the average field weakening current, $I_{\mathrm{d}\_\lim}$ represents the limit amplitude of the reference current, and $\theta_{ac}$ represents the phase of the alternating current input voltage.

In an embodiment, the motor controller is further configured to: calculate a difference between the average field weakening current and the field weakening compensation current as a field weakening control current; and perform field weakening control on the motor based on the field weakening control current.

Additional aspects and advantages of the present disclosure will be provided at least in part in the following description, or will become apparent at least in part from the following description, or can be learned from practicing of the present disclosure.

**BRIEF DESCRIPTION OF THE DRAWINGS**

The above and/or additional aspects and advantages of the present disclosure will become more apparent and more understandable from the following description of embodiments taken in conjunction with the accompanying drawings.

FIG. 1 is a flowchart illustrating a field weakening control method for a motor according to an embodiment of the present disclosure.

FIG. 2 is a flowchart illustrating a field weakening control method for a motor according to another embodiment of the present disclosure.

FIG. 3 is a flowchart illustrating a field weakening control method for a motor according to yet another embodiment of the present disclosure.

FIG. 4 is a flowchart illustrating a field weakening control method for a motor according to still yet another embodiment of the present disclosure.

FIG. 5 is a block diagram showing a structure of a motor controller according to an embodiment of the present disclosure.

FIG. 6 is a block diagram showing a structure of a field weakening control apparatus for a motor according to an embodiment of the present disclosure.

FIG. 7 is a block diagram showing a structure of a motor control system according to an embodiment of the present disclosure.

## DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

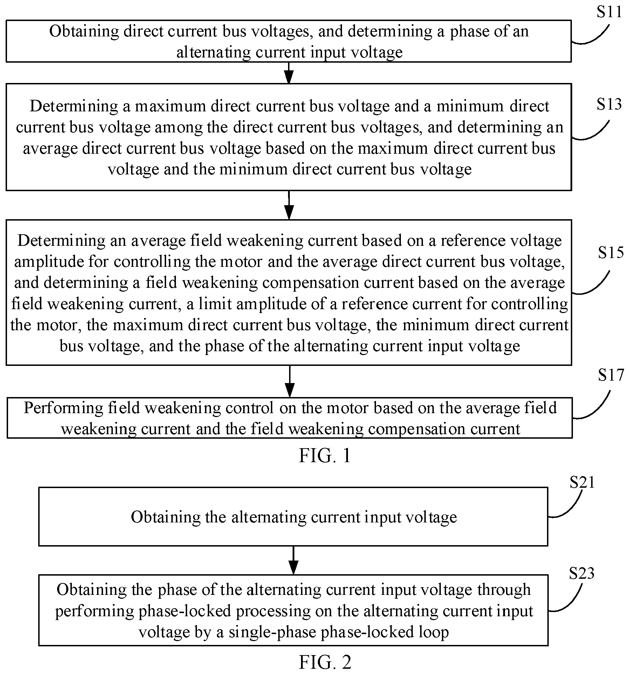

To clearly illustrate a field weakening control method and apparatus for a motor, a motor controller, a motor control system, and a medium according to the embodiments of the present disclosure, a description is made below in conjunction with a flowchart illustrating the field weakening control method for the motor illustrated in FIG. 1. As illustrated in FIG. 1, the field weakening control method for the motor according to the embodiments of the present disclosure includes operations at blocks.

At block S11, direct current bus voltages are obtained, and a phase of an alternating current input voltage is determined.

At block S13, a maximum direct current bus voltage and a minimum direct current bus voltage among the direct current bus voltages are determined, and an average direct current bus voltage is determined based on the maximum direct current bus voltage and the minimum direct current bus voltage.

At block S15, an average field weakening current is determined based on a reference voltage amplitude for controlling the motor and the average direct current bus voltage, and a field weakening compensation current is determined based on the average field weakening current, a limit amplitude of a reference current for controlling the motor, the maximum direct current bus voltage, the minimum direct current bus voltage, and the phase of the alternating current input voltage.

At block S17, field weakening control is performed on the motor based on the average field weakening current and the field weakening compensation current.

With the field weakening control method for the motor according to the embodiments of the present disclosure, fluctuations of the direct current bus voltage can be tracked for accurately performing the field weakening control on the motor, which is conducive to expanding an operation range of the motor and improving a load-carrying capacity of the motor during high-speed operation.

It should be understood that when the direct current bus voltage is in a direct current form, a field weakening control current in the same direct current form is used to track the direct current bus voltage, which can achieve a relatively satisfactory field weakening control effect. When the direct current bus voltage fluctuates, the field weakening control can be performed through keeping the field weakening control current fluctuating together with the direct current bus voltage, which can achieve the relatively satisfactory field weakening control effect. In the related art, the current direct current bus voltage and the reference voltage amplitude are obtained in real time. A difference between the current direct current bus voltage and the reference voltage amplitude is calculated. A proportional-integral regulator is used to directly perform a proportional-integral processing on the difference, to obtain the field weakening control current used for the field weakening control of the motor. However, when the current direct current bus voltage fluctuates, the proportional-integral regulator fails to respond to fluctuations of the current direct current bus voltage in time because of its slow response. That is, a field weakening control strategy in the related art is unable to determine the field weakening control current timely. Therefore, there is a technical problem in the related art that it is difficult to accurately perform the field weakening control on the motor during high-speed operation of the motor.

In the field weakening control method according to the embodiments of the present disclosure, instead of realizing the field weakening control of the motor through using the proportional-integral regulator to directly perform the proportional-integral processing on the difference between the current direct current bus voltage and the reference voltage amplitude, the average field weakening current is calculated based on the average direct current bus voltage and the reference voltage amplitude, and the average field weakening current is adjusted using the field weakening compensation current to obtain the field weakening control current used for the field weakening control of the motor. Since the field weakening compensation current can fluctuate with the direct current bus voltage in real time, the field weakening control current obtained based on the field weakening compensation current can also fluctuate with the direct current bus voltage in real time. Therefore, with the field weakening control method according to the embodiments of the present disclosure, fluctuations of the direct current bus voltage can be accurately tracked to ensure the field weakening control effect.

Specifically, the motor can include a permanent magnet synchronous motor. It should be understood that when the permanent magnet synchronous motor operates at a high speed, a permanent magnet of the permanent magnet synchronous motor has a corresponding magnetic linkage. Since the permanent magnet synchronous motor has a rotational speed equal to a control voltage divided by the magnetic linkage, when the magnetic linkage is too large, the rotational speed of the permanent magnet synchronous motor cannot be continued to be increased when the control voltage is limited. To reduce the magnetic linkage, a negative field weakening control current can be injected into a d-axis of the permanent magnet synchronous motor. The negative field weakening control current can reduce an amplitude of the magnetic linkage of the permanent magnet synchronous motor to achieve the field weakening control effect. In addition, the rotational speed of the permanent magnet synchronous motor can be increased due to a reduction of the magnetic linkage. That is, the operation range of the permanent magnet synchronous motor is expanded. Further, since a torque output capacity of the motor is related to a q-axis current of the permanent magnet synchronous motor, an output range of the q-axis current can be expanded subsequent to an injection of the negative field weakening control current into the d-axis. Therefore, the torque output capacity of the permanent magnet synchronous motor can be increased. That is, the load-carrying capacity of the permanent magnet synchronous motor during high-speed operation can be increased.

The direct current bus voltage should be understood as a bus voltage supplied to an inverter drive motor subsequent to rectification of a grid-side alternating current voltage, i.e., a voltage across two ends of a film capacitor or a ceramic capacitor in an electrolytic capacitor-less motor control system. In some embodiments, the direct current bus voltage can be collected in real time by a first voltage detection circuit. The first voltage detection circuit can be formed by a number of modules/components integrated into a Printed Circuit Board (PCB) board.

The alternating current input voltage should be understood as a real-time grid-side alternating current input voltage obtained subsequent to filtering by a circuit port.

Direct current bus voltages can be collected at a predetermined sampling frequency to obtain a plurality of direct current bus voltages. The maximum direct current bus voltage and the minimum direct current bus voltage among the plurality of direct current bus voltages can be calculated subsequent to obtaining of the plurality of direct current bus voltages.

The average direct current bus voltage can be calculated through the following formula:

$$V_{dc\_avg} = (V_{dc\_\max} + V_{dc\_\min})/2$$

, where $V_{dc\_avg}$ represents the average direct current bus voltage, $V_{dc\_\max}$ represents the maximum direct current bus voltage, and $V_{dc\_\min}$ represents the minimum direct current bus voltage.

The reference voltage amplitude should be understood as a parameter in a voltage control instruction generated during control of the motor. It should be understood that in some implementations, the motor is controlled through controlling a d-axis current and the q-axis current. The voltage control instruction needs to be generated prior to controlling of the d-axis current and the q-axis current. The d-axis current and the q-axis current are controlled based on the voltage control instruction subsequent to generation of the voltage control instruction, to control operation of the motor. During the operation of the motor, the reference voltage amplitude dynamically changes and is generated in real time. The reference voltage amplitude at a current time point can be directly determined based on data exchange between modules. In some embodiments, the reference voltage amplitude can be calculated through the following formula:

$$V_{s\_ref} = \sqrt{U_d^2 + U_q^2}$$

, where $V_{s\_ref}$ represents the reference voltage amplitude, $U_d$ represents the d-axis voltage, and $U_q$ represents the q-axis voltage. In some embodiments, the reference voltage amplitude can be adjusted through a space vector modulation.

The limit amplitude of the reference current can be understood as a minimum negative value that the field weakening control current can reach. The limit amplitude of the reference current is determined by properties of the motor per se and can be understood as a characteristic current of the motor. Limit amplitudes of reference currents can vary from motor to motor. In some embodiments, the limit amplitude of the reference current can be determined based on the magnetic linkage of the permanent magnet of the permanent magnet synchronous motor and d-axis inductance of the permanent magnet synchronous motor.

FIG. 2 is a flowchart illustrating a field weakening control method for a motor according to an embodiment of the present disclosure. In an embodiment, that "a phase of an alternating current input voltage is determined" at block S11 includes operations at blocks.

At block S21, the alternating current input voltage is obtained.

At block S23, the phase of the alternating current input voltage is obtained through performing phase-locking processing on the alternating current input voltage by a single-phase phase-locked loop.

In this way, the phase of the alternating current input voltage can be conveniently and quickly obtained.

Specifically, in some embodiments, the alternating current input voltage can be collected in real time by a second voltage detection circuit.

It should be understood that in other embodiments, the phase of the alternating current input voltage can also be collected in real time through methods such as interpolation and zero-crossing detection. The present disclosure is not limited to any of these examples.

In an embodiment, that "a maximum direct current bus voltage and a minimum direct current bus voltage among the direct current bus voltages are determined" at block S13 includes calculating, based on the direct current bus voltages, the maximum direct current bus voltage and the minimum direct current bus voltage for each cycle at a double frequency of a frequency of the alternating current voltage.

In this way, the substantially constant average direct current bus voltage can be obtained based on the minimum direct current bus voltage and the maximum direct current bus voltage.

It should be understood that, in the electrolytic capacitor-less motor control system, the direct current bus voltages fluctuate at a double frequency of a frequency of the alternating current input voltage of the grid. In each cycle, the minimum direct current bus voltages are substantially equal to each other, and the maximum direct current bus voltages are also substantially equal to each other. In this way, the direct current bus voltages determined based on the minimum direct current bus voltages and the maximum direct current bus voltages in each cycle are also substantially equal to each other.

In an example, the maximum direct current bus voltage $V_{dc\_max}$ can be calculated through the following formula: $V_{dc\_max} = max(V_{dc})$, where max should be understood as a function used to obtain the maximum direct current bus voltage, and $V_{dc}$ represents the direct current bus voltage collected at the double frequency of the frequency of the alternating current voltage. The minimum direct current bus voltage $V_{dc\_min}$ can be calculated through the following formula: $V_{dc\_min} = min(V_{dc})$, where min should be understood as a function used to obtain the minimum direct current bus voltage, and $V_{dc}$ represents the direct current bus voltage collected at the double frequency of the frequency of the alternating current voltage.

In an example, a plurality of direct current bus voltages collected in one cycle can be sorted to determine the minimum direct current bus voltage and the maximum direct current bus voltage among the plurality of direct current bus voltages.

In an example, the frequency of the alternating current input voltage of the grid is 50 Hz, and thus the double frequency of the frequency of the alternating current voltage is 100 Hz.

In an embodiment, the average field weakening current is calculated through the following formula:

$$I_{d\_avg} = (\frac{V_{dc\_avg}}{\sqrt{3}} - V_{s\_ref}) \cdot (K_p + \frac{K_i}{s})$$

, where $I_{d\_avg}$ represents the average field weakening current, $V_{dc\_avg}$ represents the average direct current bus voltage, $V_{s\_ref}$ represents the reference voltage amplitude, s represents a Laplace operator, $K_p$ represents a proportional gain coefficient, and $K_i$ represents an integral coefficient.

In this way, the proportional-integral regulator is used to perform a proportional-integral processing on a difference between the average direct current bus voltage and the reference voltage amplitude, for quickly and stably obtaining the average field weakening current.

It should be understood that in the related art, the proportional-integral regulator is used to directly perform the proportional-integral processing on the difference between the current direct current bus voltage and the reference voltage amplitude. A current obtained from the processing is directly used for the field weakening control. Considering that the current direct current bus voltage fluctuates but the proportional-integral regulator responds slowly, the fluctuations of the current direct current bus voltage fail to be tracked in real time, which leads to a relatively unsatisfactory field weakening control effect. However, in the technical solution of the present disclosure, in consideration of linear modulation, the proportional-integral regulator is used to perform a proportional-integral processing on a difference

between $\dfrac{1}{\sqrt{3}}$ of the average direct current bus voltage and the reference voltage amplitude. A current obtained from the processing is used as the average field weakening current. Since the average direct current bus voltage is substantially unchanged, the proportional-integral regulator responds quickly, and thus the average field weakening current can be obtained rapidly. The average field weakening current is equivalent to a calculated bias.

The calculated average field weakening current has a negative value. The average field weakening current can be interpreted as being in a direct current form, which can be interpreted as being in a straight line. Further, an objective of the present disclosure is to transform the straight line into a sinusoidal-shaped line, to realize a fluctuation with the direct current bus voltage.

The above-mentioned proportional gain coefficient $K_p$ and the integral coefficient $K_i$ can be set artificially in advance or calibrated experimentally, in such a manner that when the average field weakening current is calculated, relevant stored data can be read directly to determine the proportional gain coefficient $K_p$ and the integral coefficient $K_i$, and thus the average field weakening current can be calculated quickly.

In an embodiment, the field weakening compensation current is calculated through the following formula:

$$I_{d\_com} = \frac{V_{dc\_\max} - V_{dc\_\min}}{V_{dc\_\max}} \cdot (I_{d\_avg} - I_{d\_\lim}) \cdot (1 - |\sin\theta_{ac}|)$$

, where $I_{d\_com}$ represents the field weakening compensation current, $V_{dc\_\max}$ represents the maximum direct current bus voltage, $V_{dc\_\min}$ represents the minimum direct current bus voltage, $I_{d\_avg}$ represents the average field weakening current, $I_{d\_avg\,\lim}$ represents the limit amplitude of the reference current, and $\theta_{ac}$ represents the phase of the alternating current input voltage.

In this way, the original straight line is transformed into a waveform having a voltage frequency of 100 Hz through multiplying the average field weakening current by a voltage coefficient and a phase coefficient, which is conducive to tracking the fluctuations of the direct current bus voltage.

Specifically, $1-|\sin\theta_{ac}|$ can be interpreted as the phase coefficient, where $\theta_{ac}$ varies from 0° to 180°, and thus the straight line can be transformed into a sinusoidal curve. $\dfrac{V_{dc\_\max} - V_{dc\_\min}}{V_{dc\_\max}}$ can be interpreted as the voltage coefficient, which can determine upper and lower limits of the sinusoidal curve. The voltage coefficient is related to the minimum direct current bus voltage and the minimum direct current bus voltage.

The average field weakening current is equal to or greater than the limit amplitude of the reference current. When the average field weakening current reaches the limit amplitude of the reference current, i.e., when the average field weakening current is equal to the limit amplitude of the reference current, the field weakening compensation current is equal to zero.

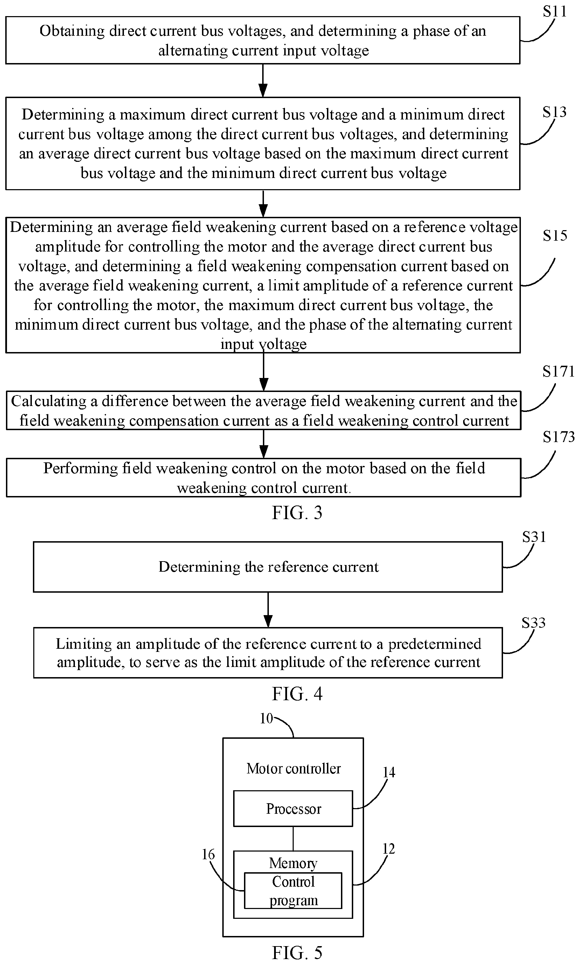

FIG. 3 is a flowchart illustrating a field weakening control method for a motor according to an embodiment of the present disclosure. As illustrated in FIG. 3, the operation at block S 17 includes operations at blocks.

At block S 171, a difference between the average field weakening current and the field weakening compensation current is calculated as a field weakening control current.

At block S 173, field weakening control is performed on the motor based on the field weakening control current.

In this way, accurate tracking can be realized by the field weakening control current when the direct current bus voltage fluctuates, which is conducive to expanding the operation range of the motor and improving the load-carrying capacity during the high-speed operation.

Specifically, the field weakening control current has a negative value. By setting the field weakening control current as the d-axis current of the motor, the field weakening control can be applied to the motor.

In some embodiments, the field weakening control current can be calculated through the following formula:

$$I_{d\_fw} = I_{d\_avg} - I_{d\_com}$$

, where $I_{d\_avg}$ represents the field weakening control current, $I_{d\_fw}$ represents the average field weakening current, and $I_{d\_com}$ represents the field weakening compensation current.

It should be understood that obtaining the field weakening control current through subtracting the field weakening compensation current from the average field weakening current can ensure that the obtained field weakening control current has the negative value.

In an example, when both a voltage coefficient and a phase coefficient of the field weakening compensation current take their maximum values, the field weakening compensation current equals to the average field weakening current minus the limit amplitude of the reference current. Therefore, subtracting the field weakening compensation current from the average field weakening current can obtain that the field weakening control current is equal to the limit amplitude of the reference current.

FIG. 4 is a flowchart illustrating a field weakening control method for a motor according to an embodiment of the present disclosure. As illustrated in FIG. 4, in an embodiment, the limit amplitude of the reference current is determined through the following operations at blocks.

At block S31, the reference current is determined.

At block S33, an amplitude of the reference current is limited to a predetermined amplitude, to serve as the limit amplitude of the reference current.

Specifically, when the amplitude of the reference current is smaller than a predetermined threshold, the amplitude of the reference current is adjusted to the predetermined threshold. When the amplitude of the reference current is greater than or equal to the predetermined threshold, the amplitude of the reference current is kept unchanged.

To implement the above embodiments, a computer-readable storage medium is further provided according to the embodiments of the present disclosure. The computer-readable storage medium stores a field weakening control program for a motor. The field weakening control program for the motor, when executed by a processor, implements the field weakening control method for the motor according to any of the above embodiments.

With the computer-readable storage medium according to the embodiments of the present disclosure, the fluctuations of the direct current bus voltage can be tracked for accurately performing the field weakening control on the motor, which is conducive to expanding the operation range of the motor and improving the load-carrying capacity of the motor during the high-speed operation.

In an example, in a case where the program is executed by the processor, the above operations at block S11, block S13, block S15, and block S17 can be implemented.

In an example, in a case where the program is executed by the processor, the above operations at block S21 and block S23 can be implemented.

In an example, in a case where the program is executed by the processor, the above operations at block S171 and block S173 can be implemented.

In an example, in a case where the program is executed by the processor, the above operations at block S31 and block S33 can be implemented.

To implement the above embodiments, a motor controller is further provided according to the embodiments of the present disclosure. FIG. 5 is a block diagram showing a structure of a motor controller according to an embodiment of the present disclosure. As illustrated in FIG. 5, a motor controller 10 provided in the present disclosure includes a memory 12, a processor 14, and a field weakening control program 16 for a motor stored on the memory 12 and executable on the processor 14. The processor 14, when executing the field weakening control program 16 for the motor, implements the field weakening control method for the motor according to any of the above embodiments.

With the motor controller 10 according to the embodiments of the present disclosure, the fluctuations of the direct current bus voltage can be tracked for accurately performing the field weakening control on the motor, which is conducive to expanding the operation range of the motor and improving the load-carrying capacity of the motor during the high-speed operation.

In an example, in a case where the program 16 is executed by the processor 14, the above operations at block S11, block S13, block S15, and block S17 can be implemented.

In an example, in a case where the program 16 is executed by the processor 14, the above operations at block S21 and block S23 can be implemented.

In an example, in a case where the program 16 is executed by the processor 14, the above operations at block S171 and block S173 can be implemented.

In an example, in a case where the program 16 is executed by the processor 14, the above operations at block S31 and block S33 can be implemented.

It should be noted that the above explanatory description of the embodiments and advantageous effects of the field weakening control method is also applicable to the motor controller 10 of the present disclosure. Details thereof will not be repeated here to avoid redundancy.

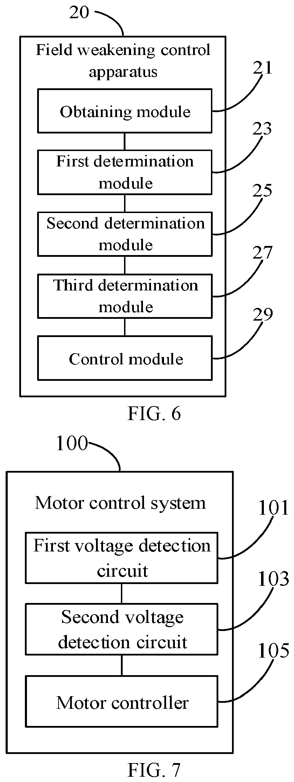

To implement the above embodiments, a field weakening control apparatus for a motor is further provided according to the embodiments of the present disclosure. FIG. 6 is a block diagram showing a structure of a field weakening control apparatus for a motor according to an embodiment of the present disclosure. As illustrated in FIG. 6, a field weakening control apparatus 20 for a motor includes an obtaining module 21, a first determination module 23, a second determination module 25, a third determination module 27, and a control module 29. The obtaining module 21 is configured to obtain direct current bus voltages. The first determination module 23 is configured to determine a phase of an alternating current input voltage. The second determination module 25 is configured to determine a maximum direct current bus voltage and a minimum direct current bus voltage among the direct current bus voltages, and determine an average direct current bus voltage based on the maximum direct current bus voltage and the minimum direct current bus voltage. The third determination module 27 is configured to determine an average field weakening current based on a reference voltage amplitude for controlling the motor and the average direct current bus voltage, and determine a field weakening compensation current based on the average field weakening current, a limit amplitude of a reference current for controlling the motor, the maximum direct current bus voltage, the minimum direct current bus voltage, and the phase of the alternating current input voltage. The control module 29 is configured to perform field weakening control on the motor based on the average field weakening current and the field weakening compensation current.

With the field weakening control apparatus 20 for the motor according to the embodiments of the present disclosure, the fluctuations of the direct current bus voltage can be tracked for accurately performing the field weakening control on the motor, which is conducive to expanding the operation range of the motor and improving the load-carrying capacity of the motor during the high-speed operation.

It should be understood that when the direct current bus voltage is in a direct current form, a field weakening control current that is in the same direct current form is used to track the direct current bus voltage, which can achieve a relatively satisfactory field weakening control effect. When the direct current bus voltage fluctuates, the field weakening control can be performed through keeping the field weakening control current fluctuating together with the direct current bus voltage, which can achieve the relatively satisfactory field weakening control effect. In the related art, the current direct current bus voltage and the reference voltage amplitude are obtained in real time. A difference between the current direct current bus voltage and the reference voltage amplitude is calculated. A proportional-integral regulator is used to directly perform a proportional-integral processing on the difference, to obtain the field weakening control current used for the field weakening control of the motor. However, when the current direct current bus voltage fluctuates, the proportional-integral regulator fails to respond to fluctuations of the current direct current bus voltage in time because of its slow response. That is, a field weakening control apparatus in the related art is unable to determine the field weakening control current timely. Therefore, there is a technical problem in the related art that it is difficult to accurately perform the field weakening control on the motor during high-speed operation of the motor.

In the field weakening control apparatus 20 according to the embodiments of the present disclosure, instead of realizing the field weakening control of the motor through using the proportional-integral regulator to directly perform the proportional-integral processing on the difference between the current direct current bus voltage and the reference voltage amplitude, the average field weakening current is calculated based on the average direct current bus voltage and the reference voltage amplitude, and the average field weakening current is adjusted using the field weakening compensation current to obtain the field weakening control current used for the field weakening control of the motor. Since the field weakening compensation current can fluctuate with the direct current bus voltage in real time, the field weakening control current obtained based on the field weakening compensation current can also fluctuate with the direct current bus voltage in real time. Therefore, with the field weakening control apparatus according to the embodiments of the present disclosure, fluctuations of the direct current bus voltage can be accurately tracked to ensure the field weakening control effect.

Specifically, the motor can include a permanent magnet synchronous motor. It should be understood that when the permanent magnet synchronous motor operates at a high speed, a permanent magnet of the permanent magnet synchronous motor has a corresponding magnetic linkage. Since the permanent magnet synchronous motor has a rotational speed equal to a control voltage divided by the magnetic linkage, when the magnetic linkage is too large, the rotational speed of the permanent magnet synchronous motor cannot be continued to be increased when the control voltage is limited. To reduce the magnetic linkage, a negative field weakening control current can be injected into a d-axis of the permanent magnet synchronous motor. The negative field weakening control current can reduce an amplitude of the magnetic linkage of the permanent magnet synchronous motor to achieve the field weakening control effect. In addition, the rotational speed of the permanent magnet synchronous motor can be increased due to a reduction of the magnetic linkage. That is, the operation range of the permanent magnet synchronous motor is expanded. Further, since a torque output capacity of the motor is related to a q-axis current of the permanent magnet synchronous motor, an output range of the q-axis current can be expanded subsequent to an injection of the negative field weakening control current into the d-axis. Therefore, the torque output capacity of the permanent magnet synchronous motor can be increased. That is, the load-carrying capacity of the permanent magnet synchronous motor during high-speed operation can be increased.

The direct current bus voltage should be understood as a bus voltage supplied to an inverter drive motor subsequent to rectification of a grid-side alternating current voltage, i.e., a voltage across two ends of a film capacitor or a ceramic capacitor in an electrolytic capacitor-less motor control system. In some embodiments, the direct current bus voltage can be collected in real time by a first voltage detection circuit. The first voltage detection circuit can be formed by a number of modules/components integrated into a PCB board.

The alternating current input voltage should be understood as a real-time grid-side alternating current input voltage obtained subsequent to filtering by a circuit port.

Direct current bus voltages can be collected at a predetermined sampling frequency to obtain a plurality of direct current bus voltages. The maximum direct current bus voltage and the minimum direct current bus voltage among the plurality of direct current bus voltages can be calculated subsequent to obtaining of the plurality of direct current bus voltages.

The average direct current bus voltage can be calculated through the following formula: $T_{dc\_avg} = (V_{dc\_max} + V_{dc\_min}) / 2$, where $V_{dc\_avg}$ represents the average direct current bus voltage, $V_{dc\_max}$ represents the maximum direct current bus voltage, and $V_{dc\_min}$ represents the minimum direct current bus voltage.

The reference voltage amplitude should be understood as a parameter in a voltage control instruction generated during control of the motor. It should be understood that in some implementations, the motor is controlled through controlling a d-axis current and the q-axis current. The voltage control instruction needs to be generated prior to controlling of the d-axis current and the q-axis current. The d-axis current and the q-axis current are controlled based on the voltage control instruction subsequent to generation of the voltage control instruction, to control operation of the motor. During the operation of the motor, the reference voltage amplitude dynamically changes and is generated in real time. The reference voltage amplitude at a current time point can be directly determined based on data exchange between modules.

In some embodiments, the reference voltage amplitude can be calculated through the following formula:

$$V_{s\_ref} = \sqrt{U_d^2 + U_q^2}$$

, where $V_{s\_ref}$ represents the reference voltage amplitude, $U_d$ represents the d-axis voltage, and $U_q$ represents the q-axis voltage. In some embodiments, the reference voltage amplitude can be adjusted through a space vector modulation.

The limit amplitude of the reference current can be understood as a minimum negative value that the field weakening control current can reach. The limit amplitude of the reference current is determined by properties of the motor per se and can be understood as a characteristic current of the motor. Limit amplitudes of reference currents can vary from motor to motor. In some embodiments, the limit amplitude of the reference current can be determined based on the magnetic linkage of the permanent magnet of the permanent magnet synchronous motor and d-axis inductance of the permanent magnet synchronous motor.

In an embodiment, the first determination module 23 is further configured to obtain the alternating current input voltage, and obtain the phase of the alternating current input voltage through performing phase-locking processing on the alternating current input voltage by a single-phase phase-locked loop.

In this way, the phase of the alternating current input voltage can be conveniently and quickly obtained.

Specifically, in some embodiments, the alternating current input voltage can be collected in real time by a second voltage detection circuit.

It should be understood that in other embodiments, the phase of the alternating current input voltage can also be collected in real time through methods such as interpolation and zero-crossing detection. The present disclosure is not limited to any of these examples.

In an embodiment, the second determination module 25 is further configured to calculate, based on the direct current bus voltages, the maximum direct current bus voltage and the minimum direct current bus voltage for each cycle at a double frequency of a frequency of the alternating current voltage.

In this way, the substantially constant average direct current bus voltage can be obtained based on the minimum direct current bus voltage and the maximum direct current bus voltage.

It should be understood that, in the electrolytic capacitor-less motor control system, the direct current bus voltages fluctuate at a double frequency of a frequency of the alternating current input voltage of the grid. In each cycle, the minimum direct current bus voltages are substantially equal to each other, and the maximum direct current bus voltages are also substantially equal to each other. In this way, the direct current bus voltages determined based on the minimum direct current bus voltages and the maximum direct current bus voltages in each cycle are also substantially equal to each other.

In an example, the maximum direct current bus voltage $V_{dc\_max}$ can be calculated through the following formula: $V_{dc\_max} = \max(V_{dc})$, where max should be understood as a function used to obtain the maximum direct current bus voltage, and $V_{dc}$ represents the direct current bus voltage collected at the double frequency of the frequency of the alternating current voltage. The minimum direct current bus voltage $V_{dc\_min}$ can be calculated through the following formula: $V_{dc\_min} = \min(V_{dc})$, where min should be understood as a function used to obtain the minimum direct current bus voltage, and $V_{dc}$ represents the direct current bus voltage collected at the double frequency of the frequency of the alternating current voltage.

In an example, a plurality of direct current bus voltages collected in one cycle can be sorted to determine the minimum direct current bus voltage and the maximum direct current bus voltage among the plurality of direct current bus voltages.

In an example, the frequency of the alternating current input voltage of the grid is 50 Hz, and thus the double frequency of the frequency of the alternating current voltage is 100 Hz.

In an embodiment, the third determination module 27 is configured to calculate the average field weakening current through the following formula:

$$I_{d\_avg} = \left(\frac{V_{dc\_avg}}{\sqrt{3}} - V_{s\_ref}\right) \cdot \left(K_p + \frac{K_i}{s}\right)$$

where $I_{d\_avg}$ represents the average field weakening current, $V_{dc\_avg}$ represents the average direct current bus voltage, $V_{s\_ref}$ represents the reference voltage amplitude, s represents a Laplace operator, $K_p$ represents a proportional gain coefficient, and $K_i$ represents an integral coefficient.

In this way, the proportional-integral regulator is used to perform a proportional-integral processing on a difference between the average direct current bus voltage and the reference voltage amplitude, for quickly and stably obtaining the average field weakening current.

It should be understood that in the related art, the proportional-integral regulator is used to directly perform the proportional-integral processing on the difference between the current direct current bus voltage and the reference voltage amplitude. A current obtained from the processing is directly used for the field weakening control. Considering that the current direct current bus voltage fluctuates but the proportional-integral regulator responds slowly, the fluctuations of the current direct current bus voltage fail to be tracked in real time, which leads to a relatively unsatisfactory field weakening control effect. However, in the technical solution of the present disclosure, in consideration of linear modulation, the proportional-integral regulator is used to perform a proportional-integral processing on a difference between $\dfrac{1}{\sqrt{3}}$ of the average direct current bus voltage and the reference voltage amplitude. A current obtained from the processing is used as the average field weakening current. Since the average direct current bus voltage is substantially unchanged, the proportional-integral regulator responds quickly, and thus the average field weakening current can be obtained rapidly. The average field weakening current is equivalent to a calculated bias.

The calculated average field weakening current has a negative value. The average field weakening current can be interpreted as being in a direct current form, which can be interpreted as being in a straight line. Further, an objective of the present disclosure is to transform the straight line into a sinusoidal-shaped line, to realize a fluctuation with the direct current bus voltage.

The above-mentioned proportional gain coefficient $K_p$ and the integral coefficient $K_i$ can be set artificially in advance or calibrated experimentally, in such a manner that when the average field weakening current is calculated, relevant stored data can be read directly to determine the proportional gain coefficient $K_p$ and the integral coefficient $K_i$, and thus the average field weakening current can be calculated quickly.

In an embodiment, the third determination module 27 is configured to calculate the field weakening compensation current through the following formula:

$$I_{d\_com} = \frac{V_{dc\_max} - V_{dc\_min}}{V_{dc\_max}} \cdot (I_{d\_avg} - I_{d\_lim}) \cdot (1 - |\sin \theta_{ac}|)$$

, where $I_{d\_com}$ represents the field weakening compensation current, $V_{dc\_max}$ represents the maximum direct current bus voltage, $V_{dc\_min}$ represents the minimum direct current bus voltage, $I_{d\_avg}$ represents the average field weakening current, $I_{d\_lim}$ represents the limit amplitude of the reference current, and $\theta_{ac}$ represents the phase of the alternating current input voltage.

In this way, the original straight line is transformed into a waveform having a voltage frequency of 100 Hz through multiplying the average field weakening current by a voltage coefficient and a phase coefficient, which is conducive to tracking the fluctuations of the direct current bus voltage.

Specifically, $1-|\sin \theta_{ac}|$ can be interpreted as the phase coefficient, where $\theta_{ac}$ varies from 0° to 180°, and thus the straight line can be transformed into a sinusoidal curve. $\dfrac{V_{dc\_max} - V_{dc\_min}}{V_{dc\_max}}$ can be interpreted as the voltage coefficient, which can determine upper and lower limits of the sinusoidal curve. The voltage coefficient is related to the minimum direct current bus voltage and the minimum direct current bus voltage.

The average field weakening current is equal to or greater than the limit amplitude of the reference current. When the average field weakening current reaches the limit amplitude of the reference current, i.e., when the average field weakening current is equal to the limit amplitude of the reference current, the field weakening compensation current is equal to zero.

In an embodiment, the control module 29 includes a calculation unit and a control unit. The calculation unit is configured to calculate a difference between the average field weakening current and the field weakening compensation current as a field weakening control current. The control unit is configured to perform field weakening control on the motor based on the field weakening control current.

In this way, accurate tracking can be realized by the field weakening control current when the direct current bus voltage fluctuates, which is conducive to expanding the operation range of the motor and improving the load-carrying capacity during the high-speed operation.

Specifically, the field weakening control current has a negative value. By setting the field weakening control current as the d-axis current of the motor, the field weakening control can be applied to the motor.

In some embodiments, the field weakening control current can be calculated through the following formula: $I_{d\_fw} = I_{d\_avg} - I_{d\_com}$, where $I_{d\_avg}$ represents the field weakening control current, $I_{d\_fw}$ represents the average field weakening current, and $I_{d\_com}$ represents the field weakening compensation current.

It should be understood that obtaining the field weakening control current through subtracting the field weakening compensation current from the average field weakening current can ensure that the obtained field weakening control current has the negative value.

In an example, when both a voltage coefficient and a phase coefficient of the field weakening compensation current take their maximum values, the field weakening compensation current equals to the average field weakening current minus the limit amplitude of the reference current. Therefore, subtracting the field weakening compensation current from the average field weakening current can obtain that the field weakening control current is equal to the limit amplitude of the reference current.

In an embodiment, the field weakening control apparatus 20 for the motor further includes a fourth determination module and a limit module. The fourth determination module is configured to determine the reference current. The limit module is configured to limit an amplitude of the reference current to a predetermined amplitude, to serve as the limit amplitude of the reference current.

Specifically, when the amplitude of the reference current is smaller than a predetermined threshold, the amplitude of the reference current is adjusted to the predetermined threshold. When the amplitude of the reference current is greater than or equal to the predetermined threshold, the amplitude of the reference current is kept unchanged.

To achieve the above embodiments, a motor control system is further provided according to the embodiments of the present disclosure. FIG. 7 is a block diagram showing a structure of a motor control system according to an embodiment of the present disclosure. As illustrated in FIG. 7, a motor control system 100 provided by the present disclosure includes a first voltage detection circuit 101, a second voltage detection circuit 103, and a motor controller 105. The first voltage detection circuit 101 is configured to detect direct current bus voltages. The second voltage detection circuit 103 is configured to detect an alternating current input voltage. The motor controller 105 is configured to determine a phase of the alternating current input voltage based on the alternating current input voltage, determine a maximum direct current bus voltage and a minimum direct current bus voltage among the direct current bus voltages, and determine an average direct current bus voltage based on the maximum direct current bus voltage and the minimum direct current bus voltage. The motor controller is further configured to determine an average field weakening current based on a reference voltage amplitude for controlling a motor and the average direct current bus voltage, determine a field weakening compensation current based on the average field weakening current, a limit amplitude of a reference current for controlling the motor, the maximum direct current bus voltage, the minimum direct current bus voltage, and the phase of the alternating current input voltage, and perform field weakening control on the motor based on the average field weakening current and the field weakening compensation current.

With the motor control system 100 according to the embodiment of the present disclosure, the fluctuations of the direct current bus voltage can be tracked for accurately performing the field weakening control on the motor, which is conducive to expanding the operation range of the motor and improving the load-carrying capacity of the motor during the high-speed operation.

It should be understood that when the direct current bus voltage is in a direct current form, a field weakening control current that is in the same direct current form is used to track the direct current bus voltage, which can achieve a relatively satisfactory field weakening control effect. When the direct current bus voltage fluctuates, the field weakening control can be performed through keeping the field weakening control current fluctuating together with the direct current bus voltage, which can achieve the relatively satisfactory field weakening control effect. In the related art, the current direct current bus voltage and the reference voltage amplitude are obtained in real time. A difference between the current direct current bus voltage and the reference voltage amplitude is calculated. A proportional-integral regulator is used to directly perform a proportional-integral processing on the difference, to obtain the field weakening control current used for the field weakening control of the motor. However, when the current direct current bus voltage fluctuates, the proportional-integral regulator fails to respond to fluctuations of the current direct current bus voltage in time because of its slow response. That is, a motor control system in the related art is unable to determine the field weakening control current timely. Therefore, there is a technical problem in the related art that it is difficult to accurately perform the field weakening control on the motor during high-speed operation of the motor.

In the motor control system 100 according to the embodiments of the present disclosure, instead of realizing the field weakening control of the motor through using the proportional-integral regulator to directly perform the proportional-integral processing on the difference between the current direct current bus voltage and the reference voltage amplitude, the average field weakening current is calculated based on the average direct current bus voltage and the reference voltage amplitude, and the average field weakening current is adjusted using the field weakening compensation current to obtain the field weakening control current used for the field weakening control of the motor. Since the field weakening compensation current can fluctuate with the direct current bus voltage in real time, the field weakening control current obtained based on the field weakening compensation current can also fluctuate with the direct current bus voltage in real time. Therefore, with the motor control system 100 according to the embodiments of the present disclosure, fluctuations of the direct current bus voltage can be accurately tracked to ensure the field weakening control effect.

Specifically, the motor can include a permanent magnet synchronous motor. It should be understood that when the permanent magnet synchronous motor operates at a high speed, a permanent magnet of the permanent magnet synchronous motor has a corresponding magnetic linkage. Since the permanent magnet synchronous motor has a rotational speed equal to a control voltage divided by the magnetic linkage, when the magnetic linkage is too large, the rotational speed of the permanent magnet synchronous motor cannot be continued to be increased when the control voltage is limited. To reduce the magnetic linkage, a negative field weakening control current can be injected into a d-axis of the permanent magnet synchronous motor. The negative field weakening control current can reduce an amplitude of the magnetic linkage of the permanent magnet synchronous motor to achieve the field weakening control effect. In addition, the rotational speed of the permanent magnet synchronous motor can be increased due to a reduction of the magnetic linkage. That is, the operation range of the permanent magnet synchronous motor is expanded. Further, since a torque output capacity of the motor is related to a q-axis current of the permanent magnet synchronous motor, an output range of the q-axis current can be expanded subsequent to an injection of the negative field weakening control current into the d-axis. Therefore, the torque output capacity of the permanent magnet synchronous motor can be increased. That is, the load-carrying capacity of the permanent magnet synchronous motor during high-speed operation can be increased.

The direct current bus voltage should be understood as a bus voltage supplied to an inverter drive motor subsequent to rectification of a grid-side alternating current voltage, i.e., a voltage across two ends of a film capacitor or a ceramic capacitor in an electrolytic capacitor-less motor control system. In some embodiments, the direct current bus voltage can be collected in real time by a first voltage detection circuit. The first voltage detection circuit can be formed by a number of modules/components integrated into a PCB board.

The alternating current input voltage should be understood as a real-time grid-side alternating current input voltage obtained subsequent to filtering by a circuit port.

Direct current bus voltages can be collected at a predetermined sampling frequency to obtain a plurality of direct current bus voltages. The maximum direct current bus voltage and the minimum direct current bus voltage among the plurality of direct current bus voltages can be calculated subsequent to obtaining of the plurality of direct current bus voltages.

The average direct current bus voltage can be calculated through the following formula: $V_{dc\_avg} = (V_{dc\_max} + V_{dc\_min}) / 2$, where $V_{dc\_avg}$ represents the average direct current bus voltage, $V_{dc\_max}$ represents the maximum direct current bus voltage, and $V_{dc\_min}$ represents the minimum direct current bus voltage.

The reference voltage amplitude should be understood as a parameter in a voltage control instruction generated during control of the motor. It should be understood that in some implementations, the motor is controlled through controlling a d-axis current and the q-axis current. The voltage control instruction needs to be generated prior to controlling of the d-axis current and the q-axis current. The d-axis current and the q-axis current are controlled based on the voltage control instruction subsequent to generation of the voltage control instruction, to control operation of the motor. During the operation of the motor, the reference voltage amplitude dynamically changes and is generated in real time. The reference voltage amplitude at a current time point can be directly determined based on data exchange between modules. In some embodiments, the reference voltage amplitude can be calculated through the following formula:

$$V_{s\_ref} = \sqrt{U_d^2 + U_q^2}$$

, where $V_{s\_ref}$ represents the reference voltage amplitude, $U_d$ represents the d-axis voltage, and $U_q$ represents the q-axis voltage. In some embodiments, the reference voltage amplitude can be adjusted through a space vector modulation.

The limit amplitude of the reference current can be understood as a minimum negative value that the field weakening control current can reach. The limit amplitude of the reference current is determined by properties of the motor per se and can be understood as a characteristic current of the motor. Limit amplitudes of reference currents can vary from motor to motor. In some embodiments, the limit amplitude of the reference current can be determined based on the magnetic linkage of the permanent magnet of the permanent magnet synchronous motor and d-axis inductance of the permanent magnet synchronous motor.

In an embodiment, the motor controller 105 is configured to obtain the phase of the alternating current input voltage through performing phase-locking processing on the alternating current input voltage by a single-phase phase-locked loop.

In this way, the phase of the alternating current input voltage can be conveniently and quickly obtained.

Specifically, in some embodiments, the alternating current input voltage can be collected in real time by the second voltage detection circuit.

It should be understood that in other embodiments, the phase of the alternating current input voltage can also be collected in real time through methods such as interpolation and zero-crossing detection. The present disclosure is not limited to any of these examples.

In an embodiment, the motor controller 105 is further configured to calculate, based on the direct current bus voltages, the maximum direct current bus voltage and the minimum direct current bus voltage for each cycle at a double frequency of a frequency of the alternating current voltage.

In this way, the substantially constant average direct current bus voltage can be obtained based on the minimum direct current bus voltage and the maximum direct current bus voltage.

It should be understood that, in the electrolytic capacitor-less motor control system, the direct current bus voltages fluctuate at a double frequency of a frequency of the alternating current input voltage of the grid. In each cycle, the minimum direct current bus voltages are substantially equal to each other, and the maximum direct current bus voltages are also substantially equal to each other. In this way, the direct current bus voltages determined based on the minimum direct current bus voltages and the maximum direct current bus voltages in each cycle are also substantially equal to each other.

In an example, the maximum direct current bus voltage $V_{dc\_max}$ can be calculated through the following formula: $V_{dc\_max} = \max(V_{dc})$, where max should be understood as a function used to obtain the maximum direct current bus voltage, and $V_{dc}$ represents the direct current bus voltage collected at the double frequency of the frequency of the alternating current voltage. The minimum direct current bus voltage $V_{dc\_min}$ can be calculated through the following formula: $V_{dc\_min} = \min(V_{dc})$, where min should be understood as a function used to obtain the minimum direct current bus voltage, and $V_{dc}$ represents the direct current bus voltage collected at the double frequency of the frequency of the alternating current voltage.

In an example, a plurality of direct current bus voltages collected in one cycle can be sorted to determine the minimum direct current bus voltage and the maximum direct current bus voltage among the plurality of direct current bus voltages.

In an example, the frequency of the alternating current input voltage of the grid is 50 Hz, and thus the double frequency of the frequency of the alternating current voltage is 100 Hz.

In an embodiment, the motor controller 105 is configured to calculate the average field weakening current through the following formula:

$$I_{d\_avg} = (\frac{V_{dc\_avg}}{\sqrt{3}} - V_{s\_ref}) \cdot (K_p + \frac{K_i}{s})$$

, where $I_{d\_avg}$ represents the average field weakening current, $V_{dc\_avg}$ represents the average direct current bus voltage, $V_{s\_ref}$ represents the reference voltage amplitude, s represents a Laplace operator, $K_p$ represents a proportional gain coefficient, and $K_i$ represents an integral coefficient.

In this way, the proportional-integral regulator is used to perform a proportional-integral processing on a difference between the average direct current bus voltage and the reference voltage amplitude, for quickly and stably obtaining the average field weakening current.

It should be understood that in the related art, the proportional-integral regulator is used to directly perform the proportional-integral processing on the difference between the current direct current bus voltage and the reference voltage amplitude. A current obtained from the processing is directly used for the field weakening control. Considering that the current direct current bus voltage fluctuates but the proportional-integral regulator responds slowly, the fluctuations of the current direct current bus voltage fail to be tracked in real time, which leads to a relatively unsatisfactory field weakening control effect. However, in the technical solution of the present disclosure, in consideration of linear modulation, the proportional-integral regulator is used to perform a proportional-integral processing on a difference between $\frac{1}{\sqrt{3}}$ of the average direct current bus voltage and the reference voltage amplitude. A current obtained from the processing is used as the average field weakening current. Since the average direct current bus voltage is substantially unchanged, the proportional-integral regulator responds quickly, and thus the average field weakening current can be obtained rapidly. The average field weakening current is equivalent to a calculated bias.

The calculated average field weakening current has a negative value. The average field weakening current can be interpreted as being in a direct current form, which can be interpreted as being in a straight line. Further, an objective of the present disclosure is to transform the straight line into a sinusoidal-shaped line, to realize a fluctuation with the direct current bus voltage.

The above-mentioned proportional gain coefficient $K_p$ and the integral coefficient $K_i$ can be set artificially in advance or calibrated experimentally, in such a manner that when the average field weakening current is calculated, relevant stored data can be read directly to determine the proportional gain coefficient $K_p$ and the integral coefficient $K_i$, and thus the average field weakening current can be calculated quickly.

In an embodiment, the motor controller 105 is configured to calculate the field weakening compensation current through the following formula:

$$I_{d\_com} = \frac{V_{dc\_max} - V_{dc\_min}}{V_{dc\_max}} \cdot (I_{d\_avg} - I_{d\_lim}) \cdot (1 - |\sin\theta_{ac}|)$$

, where $I_{d\_com}$ represents the field weakening compensation current, $V_{dc\_max}$ represents the maximum direct current bus voltage, $V_{dc\_min}$ represents the minimum direct current bus voltage, $I_{d\text{-}avg}$ represents the average field weakening current, $I_{d\_lim}$ represents the limit amplitude of the reference current, and $\theta_{ac}$ represents the phase of the alternating current input voltage.

In this way, the original straight line is transformed into a waveform having a voltage frequency of 100 Hz through multiplying the average field weakening current by a voltage coefficient and a phase coefficient, which is conducive to tracking the fluctuations of the direct current bus voltage.

Specifically, 1-|sin $\theta_{ac}$| can be interpreted as the phase coefficient, where $\theta_{ac}$ varies from 0° to 180°, and thus the straight line can be transformed into a sinusoidal curve. $\dfrac{V_{dc\_max} - V_{dc\_min}}{V_{dc\_max}}$ can be interpreted as the voltage coefficient, which can determine upper and lower limits of the sinusoidal curve. The voltage coefficient is related to the minimum direct current bus voltage and the minimum direct current bus voltage.

The average field weakening current is equal to or greater than the limit amplitude of the reference current. When the average field weakening current reaches the limit amplitude of the reference current, i.e., when the average field weakening current is equal to the limit amplitude of the reference current, the field weakening compensation current is equal to zero.

In an embodiment, the motor controller 105 is further configured to calculate a difference between the average field weakening current and the field weakening compensation current as a field weakening control current, and perform field weakening control on the motor based on the field weakening control current.

In this way, accurate tracking can be realized by the field weakening control current when the direct current bus voltage fluctuates, which is conducive to expanding the operation range of the motor and improving the load-carrying capacity during the high-speed operation.

Specifically, the field weakening control current has a negative value. By setting the field weakening control current as the d-axis current of the motor, the field weakening control can be applied to the motor.

In some embodiments, the field weakening control current can be calculated through the following formula: $I_{d\_fw} = I_{d\_avg} - I_{d\_com}$, where $I_{d\_avg}$ represents the field weakening control current, $I_{d\_fw}$ represents the average field weakening current, and $I_{d\_com}$ represents the field weakening compensation current.

It should be understood that obtaining the field weakening control current through subtracting the field weakening compensation current from the average field weakening current can ensure that the obtained field weakening control current has the negative value.

In an example, when both a voltage coefficient and a phase coefficient of the field weakening compensation current take their maximum values, the field weakening compensation current equals to the average field weakening current minus the limit amplitude of the reference current. Therefore, subtracting the field weakening compensation current from the average field weakening current can obtain that the field weakening control current is equal to the limit amplitude of the reference current.

Those skilled in the art should understand that the embodiments of the present disclosure can be provided as a method, a system, or a computer program product. Therefore, the present disclosure may adopt a form of a complete hardware embodiment, a complete software embodiment, or an embodiment combining software and hardware. In addition, the present disclosure may adopt a form of a computer program product implemented on one or more computer-usable storage media (including but not limited to a disk storage, a Compact Disc Read-Only Memory (CD-ROM), an optical storage, etc.) including computer-usable program codes.

The present disclosure is described with reference to flowcharts and/or block diagrams of the method, the device (system), and the computer program product according to the embodiments of the present disclosure. It should be understood that each process and/or block in the flowcharts and/or block diagrams, and a combination of processes and/or blocks in the flowcharts and/or block diagrams can be implemented by computer program instructions. These computer program instructions can be provided to a processor of a general-purpose computer, a special-purpose computer, an embedded processor, or other programmable data processing device to generate a machine, such that instructions executed by the processor of the computer or other programmable data processing devices generate an apparatus for implementing functions specified in one or more processes in the flowchart and/or one or more blocks in the block diagram.

These computer program instructions can further be stored in a computer-readable memory that can guide a computer or other programmable data processing devices to work in a specific manner, such that instructions stored in the computer-readable memory produce an article of manufacture including an instruction device. The instruction device implements functions specified in one or more processes in the flowchart and/or one or more blocks in the block diagram.

These computer program instructions can further be loaded on a computer or other programmable data processing devices to enable a series of operation steps to be executed on the computer or other programmable devices for producing computer-implemented processing, such that instructions executed on the computer or other programmable devices provide actions for implementing functions specified in one or more processes in the flowchart and/or one or more blocks in the block diagram.

Reference throughout this specification to "an embodiment", "some embodiments", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples.

In addition, terms such as "first" and "second" in the embodiments of the present disclosure are only used for descriptive purposes, and cannot be understood as indicating or implying relative importance or implicitly indicating the number of indicated technical features. Therefore, the features associated with terms such as "first" and "second" in any embodiment of the present disclosure may explicitly or implicitly indicate that the embodiment includes at least one of the features. In the description of the present disclosure, "plurality" means at least two, e.g., two, three, or four, unless otherwise specifically defined.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

Although the embodiments of the present disclosure have been shown and described above, it should be understood that the above-mentioned embodiments are exemplary and should not be construed as limiting the present disclosure. Those skilled in the art can make changes, modifications, substitutions, and alternations to the above-mentioned embodiments within the scope of the present disclosure.

**Claims**

1. A field weakening control method for a motor, the method comprising:

   obtaining direct current bus voltages, and determining a phase of an alternating current input voltage;
   determining a maximum direct current bus voltage and a minimum direct current bus voltage based on the direct current bus voltages, and determining an average direct current bus voltage based on the maximum direct current bus voltage and the minimum direct current bus voltage;
   determining an average field weakening current based on a reference voltage amplitude for controlling the motor and the average direct current bus voltage, and determining a field weakening compensation current based on the average field weakening current, a limit amplitude of a reference current for controlling the motor, the maximum direct current bus voltage, the minimum direct current bus voltage, and the phase of the alternating current input voltage; and
   performing field weakening control on the motor based on the average field weakening current and the field weakening compensation current.

2. The method according to claim 1, wherein said determining the phase of the alternating current input voltage comprises:

   obtaining the alternating current input voltage; and
   obtaining the phase of the alternating current input voltage through performing phase-locking processing on the alternating current input voltage by a single-phase phase-locked loop.

3. The method according to claim 1, wherein said determining the maximum direct current bus voltage and the minimum direct current bus voltage based on the direct current bus voltages comprises:
   calculating, based on the direct current bus voltages, the maximum direct current bus voltage and the minimum direct current bus voltage for each cycle at a frequency-doubled alternating current voltage.

4. The method according to any one of claims 1 to 3, wherein the average field weakening current is calculated through the following formula:

$$I_{d\_avg} = (\frac{V_{dc\_avg}}{\sqrt{3}} - V_{s\_ref}) \cdot (K_p + \frac{K_i}{s}),$$

where $I_{d\_avg}$ represents the average field weakening current, $V_{dc\_avg}$ represents the average direct current bus voltage, $V_{s\_ref}$ represents the reference voltage amplitude, $s$ represents a Laplace operator, $K_p$ represents a proportional gain coefficient, and $K_i$ represents an integral coefficient.

5. The method according to any one of claims 1 to 3, wherein the field weakening compensation current is calculated through the following formula:

$$I_{d\_com} = \frac{V_{dc\_max} - V_{dc\_min}}{V_{dc\_max}} \cdot (I_{d\_avg} - I_{d\_lim}) \cdot (1 - |\sin\theta_{ac}|),$$

where $I_{d\_com}$ represents the field weakening compensation current, $V_{dc\_max}$ represents the maximum direct current bus voltage, $V_{dc\_min}$ represents the minimum direct current bus voltage, $I_{d\_avg}$ represents the average field weakening current, $I_{d\_avg}$ represents the limit amplitude of the reference current, and $\theta_{ac}$ represents the phase of the alternating current input voltage.

6. The method according to any one of claims 1 to 3, wherein said performing the field weakening control on the motor based on the average field weakening current and the field weakening compensation current comprises:

   calculating a difference between the average field weakening current and the field weakening compensation current and taking the difference as a field weakening control current; and
   performing field weakening control on the motor based on the field weakening control current.

7. The method according to any one of claims 1 to 3, wherein the limit amplitude of the reference current is determined through:

   determining the reference current; and
   limiting an amplitude of the reference current to a predetermined amplitude, to serve as the limit amplitude of the reference current.

8. A computer-readable storage medium, having a field weakening control program for a motor stored thereon, wherein the field weakening control program for the motor, when executed by a processor, implements the field weakening control method for the motor according to any one of claims 1 to 7.

9. A motor controller, comprising:

   a memory;
   a processor; and
   a field weakening control program for a motor stored on the memory and executable on the processor, wherein the processor, when executing the field weakening control program for the motor, implements the field weakening control method for the motor according to any one of claims 1 to 7.

10. Afield weakening control apparatus for a motor, the apparatus comprising:

   an obtaining module configured to obtain direct current bus voltages;
   a first determination module configured to determine a phase of an alternating current input voltage;
   a second determination module configured to determine a maximum direct current bus voltage and a minimum direct current bus voltage based on the direct current bus voltages, and determine an average direct current bus voltage based on the maximum direct current bus voltage and the minimum direct current bus voltage;
   a third determination module configured to determine an average field weakening current based on a reference voltage amplitude for controlling the motor and the average direct current bus voltage, and determine a field weakening compensation current based on the average field weakening current, a limit amplitude of a reference current for controlling the motor, the maximum direct current bus voltage, the minimum direct current bus voltage, and the phase of the alternating current input voltage; and

a control module configured to perform field weakening control on the motor based on the average field weakening current and the field weakening compensation current.

11. A motor control system, comprising:

a first voltage detection circuit configured to detect direct current bus voltages;
a second voltage detection circuit configured to detect an alternating current input voltage; and
a motor controller configured to determine a phase of the alternating current input voltage based on the alternating current input voltage, determine a maximum direct current bus voltage and a minimum direct current bus voltage based on the direct current bus voltages, and determine an average direct current bus voltage based on the maximum direct current bus voltage and the minimum direct current bus voltage,
wherein the motor controller is further configured to determine an average field weakening current based on a reference voltage amplitude for controlling a motor and the average direct current bus voltage, determine a field weakening compensation current based on the average field weakening current, a limit amplitude of a reference current for controlling the motor, the maximum direct current bus voltage, the minimum direct current bus voltage, and the phase of the alternating current input voltage, and perform field weakening control on the motor based on the average field weakening current and the field weakening compensation current.

12. The system according to claim 11, wherein the motor controller is further configured to obtain the phase of the alternating current input voltage through performing phase-locking processing on the alternating current input voltage by a single-phase phase-locked loop.

13. The system according to claim 11, wherein the motor controller is further configured to calculate, based on the direct current bus voltages, the maximum direct current bus voltage and the minimum direct current bus voltage for each cycle at a frequency-doubled alternating current voltage.

14. The system according to any one of claims 11 to 13, wherein the motor controller is further configured to calculate the average field weakening current through the following formula:

$$I_{d\_avg} = (\frac{V_{dc\_avg}}{\sqrt{3}} - V_{s\_ref}) \cdot (K_\mathrm{p} + \frac{K_i}{s}),$$

where $I_{d\_avg}$ represents the average field weakening current, $V_{dc\_avg}$ represents the average direct current bus voltage, $V_{s\_ref}$ represents the reference voltage amplitude, $s$ represents a Laplace operator, $K_p$ represents a proportional gain coefficient, and $K_\mathrm{i}$ represents an integral coefficient.

15. The system according to any one of claims 11 to 13, wherein the motor controller is further configured to calculate the field weakening compensation current through the following formula:

$$I_{\mathrm{d}\_com} = \frac{V_{dc\_\max} - V_{dc\_\min}}{V_{dc\_\max}} \cdot (I_{\mathrm{d}\_avg} - I_{\mathrm{d}\_\lim}) \cdot (1 - |\sin \theta_{ac}|),$$

where $I_{d\_avg}$ represents the field weakening compensation current, $V_{dc\_\max}$ represents the maximum direct current bus voltage, $V_{dc\_\min}$ represents the minimum direct current bus voltage, $I_{d\_avg}$ represents the average field weakening current, $I_{d\_avg\lim}$ represents the limit amplitude of the reference current, and $\theta_{ac}$ represents the phase of the alternating current input voltage.

16. The system according to any one of claims 11 to 13, wherein the motor controller is further configured to:

calculate a difference between the average field weakening current and the field weakening compensation current and take the difference as a field weakening control current; and
perform field weakening control on the motor based on the field weakening control current.

| Obtaining direct current bus voltages, and determining a phase of an alternating current input voltage | S11 |

| Determining a maximum direct current bus voltage and a minimum direct current bus voltage among the direct current bus voltages, and determining an average direct current bus voltage based on the maximum direct current bus voltage and the minimum direct current bus voltage | S13 |

| Determining an average field weakening current based on a reference voltage amplitude for controlling the motor and the average direct current bus voltage, and determining a field weakening compensation current based on the average field weakening current, a limit amplitude of a reference current for controlling the motor, the maximum direct current bus voltage, the minimum direct current bus voltage, and the phase of the alternating current input voltage | S15 |

| Performing field weakening control on the motor based on the average field weakening current and the field weakening compensation current | S17 |

FIG. 1

| Obtaining the alternating current input voltage | S21 |

| Obtaining the phase of the alternating current input voltage through performing phase-locked processing on the alternating current input voltage by a single-phase phase-locked loop | S23 |

FIG. 2

S11

Obtaining direct current bus voltages, and determining a phase of an alternating current input voltage

S13

Determining a maximum direct current bus voltage and a minimum direct current bus voltage among the direct current bus voltages, and determining an average direct current bus voltage based on the maximum direct current bus voltage and the minimum direct current bus voltage

S15

Determining an average field weakening current based on a reference voltage amplitude for controlling the motor and the average direct current bus voltage, and determining a field weakening compensation current based on the average field weakening current, a limit amplitude of a reference current for controlling the motor, the maximum direct current bus voltage, the minimum direct current bus voltage, and the phase of the alternating current input voltage

S171

Calculating a difference between the average field weakening current and the field weakening compensation current as a field weakening control current

S173

Performing field weakening control on the motor based on the field weakening control current.

FIG. 3

S31

Determining the reference current

S33

Limiting an amplitude of the reference current to a predetermined amplitude, to serve as the limit amplitude of the reference current

FIG. 4

10

Motor controller

14

Processor

16

Memory

12

Control program

FIG. 5

20

Field weakening control
apparatus

Obtaining module | 21

First determination
module | 23

Second determination
module | 25

Third determination
module | 27

Control module | 29

FIG. 6

100

Motor control system

First voltage detection
circuit | 101

Second voltage
detection circuit | 103

Motor controller | 105

FIG. 7

### INTERNATIONAL SEARCH REPORT

| International application No. |
|---|
| **PCT/CN2022/079137** |

**A. CLASSIFICATION OF SUBJECT MATTER**

H02P 21/14(2016.01)i; H02P 21/22(2016.01)i; H02P 25/022(2016.01)i

According to International Patent Classification (IPC) or to both national classification and IPC

**B. FIELDS SEARCHED**

Minimum documentation searched (classification system followed by classification symbols)

H02P; H02M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 弱磁, 输入, 交流, 相位, 相角, 补偿, weak+, field, magnet+, flux, input+, AC, alternat+ current, phase, compensat+

**C. DOCUMENTS CONSIDERED TO BE RELEVANT**

| Category* | Citation of document, with indication, where appropriate, of the relevant passages | Relevant to claim No. |
|---|---|---|
| X | CN 112787495 A (GUANGDONG MEIZHI COMPRESSOR CO., LTD.) 11 May 2021 (2021-05-11)<br>  description, paragraphs 2-84, and figures 1-6 | 1-4, 6-14, 16 |
| A | CN 106788115 A (NANJING UNIVERSITY OF AERONAUTICS AND ASTRONAUTICS) 31 May 2017 (2017-05-31)<br>  entire document | 1-16 |
| A | CN 112583317 A (GUANGDONG WELLING MOTOR MANUFACTURING CO., LTD. et al.) 30 March 2021 (2021-03-30)<br>  entire document | 1-16 |
| A | CN 106655953 A (QINGDAO HAIER AIR CONDITIONER GENERAL CO., LTD.) 10 May 2017 (2017-05-10)<br>  entire document | 1-16 |
| A | WO 2015156003 A1 (HITACHI INDUSTRIAL EQUIPMENT SYSTEMS CO., LTD.) 15 October 2015 (2015-10-15)<br>  entire document | 1-16 |

☐ Further documents are listed in the continuation of Box C.      ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 July 2022** | **08 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/079137**

| Patent document cited in search report | | | Publication date (day/month/year) | Patent family member(s) | | | Publication date (day/month/year) |
|---|---|---|---|---|---|---|---|
| CN | 112787495 | A | 11 May 2021 | CN | 112787495 | B | 31 December 2021 |
| CN | 106788115 | A | 31 May 2017 | CN | 106788115 | B | 09 July 2019 |
| CN | 112583317 | A | 30 March 2021 | | None | | |
| CN | 106655953 | A | 10 May 2017 | WO | 2018068390 | A1 | 19 April 2018 |
| | | | | CN | 106655953 | B | 23 July 2019 |
| WO | 2015156003 | A1 | 15 October 2015 | JP | 2015201956 | A | 12 November 2015 |
| | | | | JP | 6358834 | B2 | 18 July 2018 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111466435